# EUROPÄISCHE PATENTSCHRIFT

(11) **EP 0 799 844 B1**
(45) Veröffentlichungstag und Bekanntmachung des Hinweises auf die Patenterteilung: **08.12.1999**
(21) Anmeldenummer: 97101424.6
(22) Anmeldetag: 30.01.1997
(51) Int. Cl.: C08G 18/80, C08G 18/42, C07D 251/34, C07D 521/00, C09D 175/04, C08G 18/79

(54) **Verfahren zur Herstellung von in der Hitze härtbaren wetterstabilen Polyurethan-Pulverlacken sowie die danach erhaltenen Beschichtungen**
Process for the production of heat crosslinkable weather resistant polyurethane powder coatings and coatings obtained therefrom
Procédé pour la préparation de peintures en poudre de polyurethane durcissables al chaleur et revetements résistant aux interpéries

(30) Priorität: 26.03.1996 DE 19611821
(43) Veröffentlichungstag der Anmeldung: 08.10.1997
(73) Patentinhaber: Degussa-Hüls Aktiengesellschaft, 60287 Frankfurt am Main (DE)
(72) Erfinder: Gras, Rainer, Dr., 44879 Bochum (DE)

(56) Entgegenhaltungen:
- EP-A- 0 004 571
- EP-A- 0 047 452
- EP-A- 0 132 518
- EP-A- 0 224 165
- WO-A-93/23447

## Beschreibung

Die vorliegende Erfindung betrifft ein Verfahren zur Herstellung von transparenten und pigmentierten, in der Hitze härtbaren, wetterstabilen Polyurethan (PUR)-Pulverlacken hoher Reaktivität sowie die danach erhaltenen Beschichtungen.

In der Hitze härtbare PUR-Pulverlacke auf Basis von partiell oder total blockierten Polyisocyanaten und hydroxylgruppenhaltigen Polymeren, deren Erweichungspunkt oberhalb 40 °C liegt, gehören zum Stand der Technik und werden in der Literatur vielfach beschrieben, wie in den DE-OSS 21 05 777, 25 42 191, 27 35 497 ( 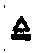 USP 4 246 380), 28 42 641, 30 04 876, 30 39 824 oder 31 28 743.

PUR-Pulverlacke bestehen im wesentlichen aus einer hydroxylgruppenaufweisenden Komponente und einem Polyisocyanat, dessen NCO-Gruppen mit einem Blockierungsmittel teilweise oder vollständig maskiert sind, so daß die OH/NCO-Polyadditionsreaktion bei Temperaturen unterhalb 140 °C nicht einsetzen kann. Erst nach dem Erhitzen auf ≥ 150 °C lassen sich derartige PUR-Pulverlacke in praxisrelevanter Zeit unter Respaltung des Blockierungsmittels und Umsetzung der OH- mit den NCO-Gruppen zu einem Lackfilm vernetzen.

Aus der Vielzahl der Blockierungsmittel, beschrieben in Houben-Weyl, Methoden der organischen Chemie, Band XIV/2, 4. Auflage, Georg Thieme Verlag, Stuttgart 1963, Seiten 61 - 70, hat sich technisch lediglich ε-Caprolactam durchgesetzt, wenn der Einsatz der blockierten Polyisocyanate auf dem PUR-Pulverlacksektor erfolgen soll.

PUR-Pulverlacke auf Basis ε-Caprolactam-blockierter Polyisocyanate erfordern für die Vernetzung der Beschichtung Härtungstemperaturen zwischen 170 und 200 °C.

So besteht großes Interesse, die hohen Härtungstemperaturen zu senken, um temperaturempfindliche Werkstücke der Pulvertechnologie zugänglich zu machen.

Ebenfalls von Interesse ist die Senkung der Härtungszeiten, um die Produktionszahlen-Stückzahlen - erhöhen zu können. Es sind also neben ökologischen auch ökonomische Aspekte von Bedeutung.

Man versucht dies durch den Einsatz von oximblockierten (cyclo)aliphatischen Polyisocyanaten zu erreichen. So werden z. B. oximblockierte Polyisocyanate und ihre Verwendung in PUR-Pulverlacken in der DE-OS 22 00 342, EP-OS 0 432 257, USP 3 857 818 beschrieben. In der EP-PS 0 401 343 werden PUR-Pulver beschrieben, die als Härterkomponente ein acetonoximblockiertes Trimethylolpropan-Tetramethylxylylendiisocyanat enthalten. In der EP-PS 0 409 745 werden als PUR-Pulverhärter 2.4-Dimethyl-3-pentanonoxim- bzw. 2.6-Dimethyl-4-heptanonoximblockierte Isocyanurate des Isophorondiisocyanats (IPDI), Methylen-bis-4.4'-cyclohexylisocyanats und des m- und p-Tetramethylxylylendiisocyanats genannt.

Gegenstand der EP-PS 0 531 862 ist ein Verfahren zur Herstellung von Pulverlacken mit einer Glasübergangstemperatur von 20 - 80 °C durch Vermischen von A) einer Polyolkomponente, B) eines ketonoximblockierten Polyisocyanats, C) einer Katalysatorkomponente, bestehend aus mindestens einem Katalysator für die Reaktion zwischen blockierten NCO- und Hydroxylgruppen und ggf. D) weiteren aus der Pulverlacktechnologie bekannten Hilfs- und Zusatzmitteln, wobei man zur Herstellung der Pulverlacke die Komponenten A, B, C und ggf. D in einem inerten Lösungsmittel oder Lösungsmittelgemisch mit einem zwischen 50 und 150 °C liegenden Siedepunkt oder -bereich homogen löst dann die dabei resultierende Lösung vom Lösungsmittel befreit.

Mit oximblockierten Polyisocyanaten können in der Tat PUR-Pulverlacke hergestellt werden, deren Härtungstemperaturen auf niedrigerem Niveau liegen. Es ist allerdings zwischen transparenten und pigmentierten Beschichtungen zu unterscheiden. Nachteilig wirkt sich die relativ hohe Thermoinstabilität derartiger PUR-Pulverlacke aus; die Beschichtungen neigen zur Vergilbung. Weiterhin nachteilig ist die hohe Anfälligkeit zur Nadelstich- bis zur Schaumbildung, so daß oximblockiertes Polyisocyanat enthaltende PUR-Pulverlacke eingeschränkt verwendbar sind und lediglich zur Dünnschichtlackierung eingesetzt werden können.

In der DE-OS 28 12 252 werden 1,2,4-Triazol-blockierte Polyisocyanate beschrieben, die in PUR-Pulverlacken eingesetzt werden: "sie verbessern überraschenderweise weiter die Pulverlackbindemittel des Standes der Technik". Es handelt sich dabei um 1,2,4-Triazol-blockierte Diisocyanate und/oder deren urethangruppentragende Polyisocyanate.

In der DE-OS 30 33 860 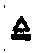 EP 0 047 452 wird von Seite 2, Zeile 29 bis Seite 3, Zeile 6 beschrieben, daß das blockierte Isocyanato-Isocyanurat des Hexamethylendiisocyanats (HDI) nicht für den PUR-Pulverlackeinsatz geeignet ist. Eine Ausnahme bildet das blockierte Isocyanato-Isocyanurat des Isophorondiisocyanats (IPDI). Wie in der EP 0 047 452 weiterhin gezeigt wird, lassen sich durch Mischtrimerisierung dieser beiden Polyisocyanate (HDI/IPDI) Produkte herstellen, die in ihrer blockierten Form, vgl. Seite 8, Zeilen 16 -21, für den PUR-Pulverlacksektor - wenn auch nicht experimentell belegt - geeignet sind. Es wird auf die Variabilität des Schmelzbereiches als Funktion der eingesetzten HDI/IPDI-Molverhältnisse verwiesen; erhöhte Lösemittelverträglichkeit, Kälteflexibilität usw., vgl. Seite 3, Zeilen 19 - 21, werden genannt.

In der DE-OS 33 22 718 werden blockierte Isocyanato-Isocyanurate des 2-Methylpentamethylendiisocyanats/2-Ethylbutylendiisocyanats und IPDI-Mischtrimerisate oder Gemische beschrieben.

Die Aufgabe der vorliegenden Erfindung besteht darin, die Nachteile des Standes der Technik zu beheben und vor allem PUR-Pulverlacke, transparente wie pigmentierte, zur Verfügung zu stellen, die vor allem eine hohe Reaktivität auszeichnet und damit niedrige Härtungstemperaturen gestatten und trotz hoher Netzwerkdichte hohe Flexibilitätswerte aufweisen. Außerdem sollte auch die für PUR-Pulverlacke relevante Beschichtungsstärke erfüllt werden können.

Die Aufgabe wurde durch die Lehre gemäß der Patentansprüche gelöst.

Gegenstand der vorliegenden Erfindung sind demnach PUR-Pulverlacke mit hoher Reaktivität, im wesentlichen enthaltend
a) eine mit 1.2.4-Triazol partiell oder total blockierte Isocyanatkomponente,
b) hydroxylgruppenhaltige Polymere und
c) gegebenenfalls übliche Hilfs- und Zuschlagsstoffe,
wobei die Isocyanatkomponente aus physikalischen Gemischen einzelner Trimerisate (Isocyanato-Isocyanurate) aus aliphatischen und (cyclo)aliphatischen und/oder cycloaliphatischen Diisocyanaten besteht.

Die erfindungsgemäß eingesetzten Polyisocyanate sind physikalische Gemische einzelner Isocyanato-Isocyanurate (Trimerisate) in den genannten Verhältnissen.

Als Polyisocyanate im Sinne dieser Anmeldung sind insbesondere Diisocyanate aliphatischer und (cyclo)aliphatischer und/oder cycloaliphatischer Struktur anzusehen. Statt einzelne Vertreter hier aufzuführen, wird auf die Literatur verwiesen: Houben-Weyl, Methoden der organischen Chemie, Band 14/2, S. 61 ffund J. Liebigs Annalen der Chemie, Band 562, S. 75 -136. Bevorzugt werden in der Regel die technisch leicht zugänglichen aliphatischen - wie Hexamethylendiisocyanat - die (cyclo)aliphatischen - wie Isophorondiisocyanat - sowie die cycloaliphatischen Diisocyanate - wie 4.4'-Diisocyanatodicyclohexylmethan - eingesetzt. Die erfindungsgemäßen physikalischen Mischungen bestehen immer aus einer aliphatischen Isocyanatkomponente und mindestens einem Vertreter aus der Gruppe der (cyclo)- und cycloaliphatischen Isocyanatkomponente. Unter (cyclo)aliphatischen Diisocyanaten versteht der Fachmann hinlänglich gleichzeitig cyclisch und aliphatisch gebundene NCO-Gruppen wie es z. B. beim IPDI der Fall ist.

Demgegenüber versteht man unter cycloaliphatischen Diisocyanaten solche, die nur direkt am cycloaliphatischen Ring gebundene NCO-Gruppen aufweisen.

Die Herstellung der Trimerisate erfolgte in bekannter Weise nach den Angaben der GB-PS 13 91 066, DE-OSS 23 25 826, 26 44 684 oder 29 16 201. Die Verfahrensprodukte bestehen aus Isocyanatoisocyanurat mit gegebenenfalls höheren Oligomeren und weisen einen NCO-Gehalt von 12 - 22 Gew.-%, vorzugsweise 14 - 21,5 Gew.-%, auf, der durch das Blockieren mit 1,2,4-Triazol auf einen NCO-Gehalt von ≤ 5 Gew.-%, vorzugsweise ≤ 3 Gew.-%, insbesondere ≤ 2 Gew.-%, herabgesetzt wird.

Das NCO-Gruppen-/Blockierungsmittelverhältnis liegt erfindungsgemäß bei 1:0,5 bis 1, vorzugsweise 1:0,8 bis 1.

Der latente NCO-Gehalt der 1.2.4-Triazol-blockierten Polyisocyanate beträgt erfindungsgemäß 9 - 18 Gew.-%, vorzugsweise 11 - 16 Gew.-%.

Die hydroxylgruppenhaltigen Polymeren sind insbesondere Polyester auf Basis von überwiegend aromatischen Dicarbonsäuren, Diolen und Triolen in PUR-Pulverlacken.

Ein weiterer Gegenstand der Erfindung ist die Verwendung der Stoffgemische als Pulverlacke bzw. als Bindemittel für Pulverlacke zum Beschichten beliebiger hitzehärtbarer Substrate, insbesondere von hitzeempfindlichen Werkstücken, nach an sich bekannten, für die Verarbeitung von Pulverlacken geeigneten Beschichtungsmethoden. Die transparenten PUR-Pulverlacke eignen sich vor allem aufgrund der hohen Reaktivität - niedrige Härtungstemperaturen - und des ausgezeichneten Verlaufs als Topcoat, insbesondere als Automobil-Decklack.

Die blockierten Polyisocyanate und die hydroxylgruppentragenden Polymere werden gegebenenfalls unter Zumischung der in der PUR-Chemie üblichen Zusätze mit bekannten Technologien zu sprühfertigen Pulvern formuliert, mittels elektrostatischem Auftrag appliziert und zwischen 130 und 250 °C, vorzugsweise 140 und 180 °C, eingebrannt.

Das Mischungsverhältnis läßt sich in weiten Grenzen variieren. Die besten lacktechnischen Kenndaten werden erhalten, wenn das Bindemittelverhältnis aus 9 - 45 Gew.-% Vernetzer und 55 - 91 Gew.-% Polyester besteht, wobei das OH/NCO-Verhältnis von 1:0,6 - 1:1,2, vorzugsweise 1:0,9 - 1:1,1, eingestellt werden kann. Besonders empfehlenswert ist, pro OH-Aquivalent der Polyhydroxylverbindung ein Äquivalent NCO des Vernetzers einzusetzen.

Zur Durchführung der Blockierungsreaktion wird die Isocyanatkomponente vorgelegt und das Blockierungsmittel portionsweise zugegeben. Die Umsetzung erfolgt bei Temperaturen unterhalb der Aufspalttemperatur bei 90 - 130 °C, vorzugsweise zwischen 100 und 120 °C. Auch können für die Isocyanat-Polyadditionsreaktion die in der PUR-Chemie üblichen Katalysatoren zugesetzt werden in einer Menge von 0,001 - 1 Gew.-%, bezogen auf das Gesamtgemisch.

Die lösemittelfreie Blockierungsreaktion kann sowohl diskontinuierlich im Reaktor als auch kontinuierlich im statischen Mischer oder vorteilhaft im Mehrwellenkneter, insbesondere im Zweischneckenextruder, durchgeführt werden.

Zur Herstellung der erfindungsgemäßen Bindemittel für PUR-Pulverlacke bzw. der PUR-Pulverlacke werden die üblichen Harze der PUR-Pulverlacke, vorzugsweise hydroxylgruppenhaltige Polyester, verwendet.

Als hydroxylgruppenhaltige Polyester werden solche mit einem Molekulargewicht von 800 - 10 000, vorzugsweise 1200 - 5000, einer Hydroxylzahl von 20 - 150 mg KOH/g, vorzugsweise 30 - 100 mg KOH/g, und Schmelzpunkten oberhalb 60 °C, vorzugsweise zwischen 70 und 100 °C, bevorzugt. Solche Polyesterpolyole werden z. B. in den DE-OSS 19 57 483, 25 42 191, 30 04 876 und 31 43 060 beschrieben.

Die hydroxylgruppenhaltigen Polyester werden in solchen Mengen eingesetzt, daß das OH/NCO-Verhältnis von 1:0,6 - 1:1,2, vorzugsweise von 1:0,9 - 1:1,1, beträgt.

Um die Geliergeschwindigkeit der hitzehärtbaren Pulverlacke zu erhöhen, kann man Katalysatoren zusetzen. Als Katalysatoren verwendet man Organozinnverbindungen wie Dibutylzinndilaurat (DBTL), Sn(II)-octoat, Dibutylzinnmaleat usw. Die Menge an zugesetztem Katalysator beträgt 0,1 - 5 Gew.-T. auf 100 Gew.-T. des hydroxylgruppentragenden Polyester.

Die Isocyanatkomponente wird für die Herstellung von PUR-Pulverlacken mit dem geeigneten hydroxylgruppenhaltigen Polymeren und gegebenenfalls Katalysatoren sowie Pigmenten und üblichen Hilfsmitteln wie Füllstoffen und Verlaufsmitteln, z. B. Siliconöl, Acrylatharzen, gemischt und in der Schmelze homogenisiert. Dies kann in geeigneten Aggregaten wie beheizbaren Knetern, vorzugsweise je-doch durch Extrudieren, erfolgen, wobei eine Temperaturobergrenze von 120 °C nicht überschritten werden sollte. Die extrudierte Masse wird nach Abkühlen auf Raumtemperatur und nach geeigneter Zerkleinerung zum sprühfertigen Pulver vermahlen. Das Auftragen des sprühfertigen Pulvers auf geeignete Substrate kann nach den bekannten Verfahren, z. B. elektrostatisches Pulversprühen, Wirbelsintern, elektrostatisches Wirbelsintern, erfolgen. Nach dem Pulverauftrag werden die beschichteten Werkstücke zur Aushärtung zwischen 60 und 4 Minuten auf eine Temperatur von 130 bis 200 °C, vorzugsweise 25 und 5 Minuten bei 140 bis 180 °C erhitzt.

Zur Beschichtung mit den erfindungsgemäßen pulverförmigen Überzugsmitteln eignen sich alle Substrate, die die angegebenen Härtungsbedingungen ohne Einbuße der mechanischen Eigenschaften vertragen, z. B. Metalle, Glas, Keramik, Kunststoffoder Holz.

Die erhaltenen PUR-Pulverlacke zeichnen sich im Vergleich zu den bekannten durch ein verbessertes Verhalten gegenüber Hitze, UV-Licht und chemischen Einflüssen aus; die transparenten Beschichtungen weisen insbesondere einen ausgezeichneten Verlauf auf.

### Experimenteller Teil

### A. Herstellung der 1,2,4-Triazol-blockierten Isocyanato-Isocyanurat-Gemische

### Allgemeine Herstellungsvorschrift

Die gemäß Tabelle 1 eingesetzten Isocyanurate wurden bei 100 - 120 °C im doppelwandigen Reaktor homogenisiert. Vor der 1,2,4-Triazolzugabe wird der NCO-Gehalt der Schmelze titrimetrisch überprüft und anschließend die berechnete Menge 1.2.4-Triazol portionsweise so zugesetzt, daß die Reaktionstemperatur 130 °C nicht übersteigt. Nach der 1,2,4-Triazolzugabe wird das Reaktionsprodukt noch so lange bei 120 °C gerührt, bis der NCO-Gehalt unter den berechneten Werten bzw. < 0,5 Gew.-% gesunken ist.

Wird ggf. Dibutylzinndilaurat (DBTL) zur Reaktionsbeschleunigung benötigt, erfolgt die Zugabe nach der Isocyanurat-Homogenisierung bzw. vor der Blockierungsmittelzugabe.

Eingesetzt wurden die technisch zugänglichen Isocyanurate z. B. der

| | | |
|---|---|---|
| A | Hüls AG VESTANAT T 1890 | NCO-Gehalt: 17,3 ± 0,3 |
| | | |
| B | Bayer AG DESMODUR N 3300 | NCO-Gehalt: 21,8 ± 0,3 |
| | | |
| C | sowie das Laborprodukt W 1600 aus 4.4'-Diisocyanatodicyclohexylmethan | NCO-Gehalt: 12,6 ± 0,3 |

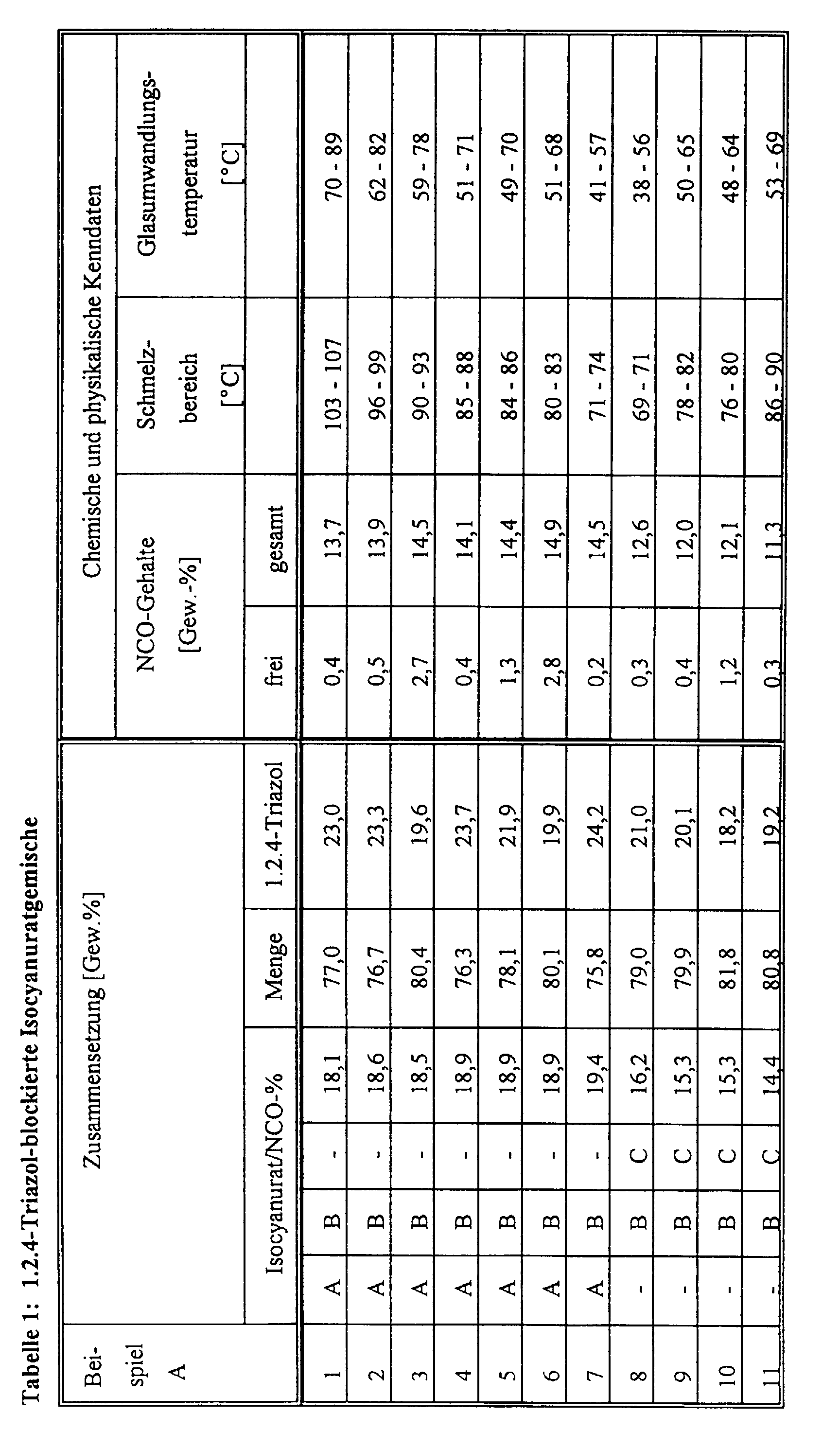

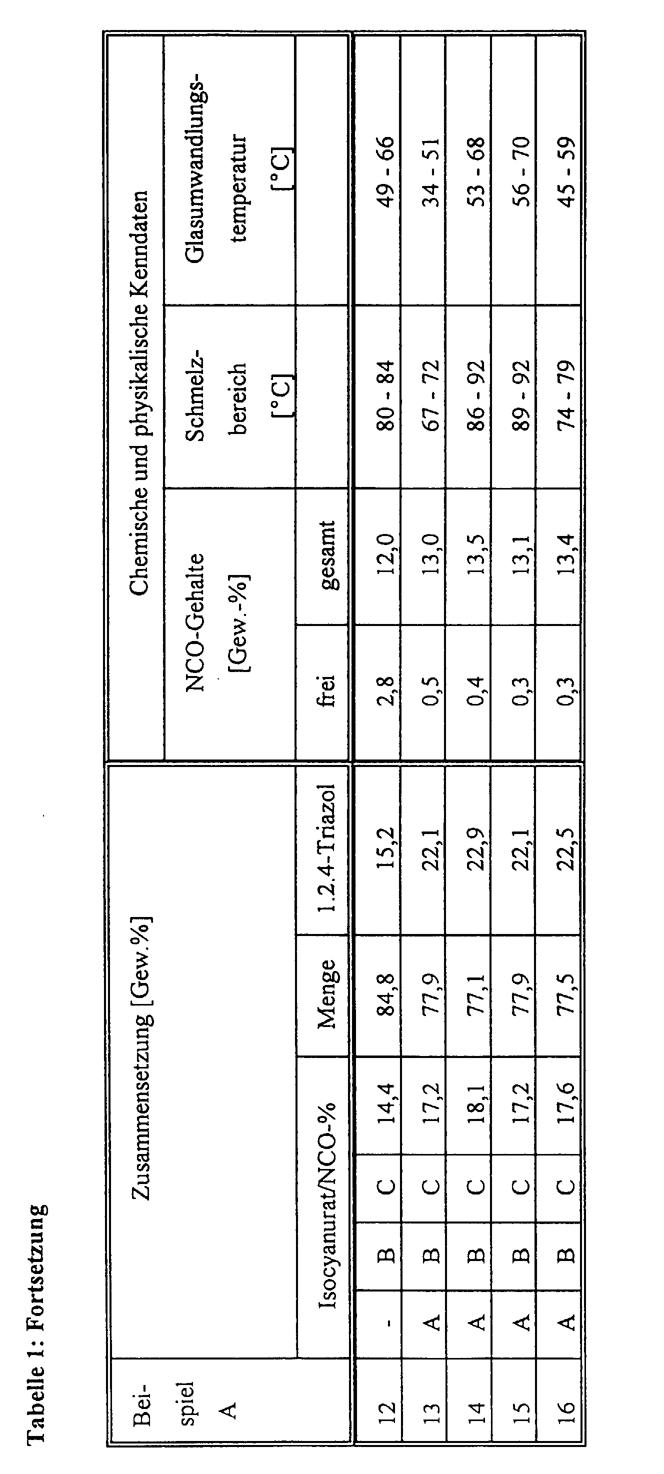

### B Polyolkomponente

### Allgemeine Herstellungsvorschrift

Die Ausgangskomponenten - Terephthalsäure (TS), Dimethylterephthalat (DMT), Hexandiol-1.6 (HD), Neopentylglykol (NPG), 1.4-Dimethylolcyclohexan (DMC) und Trimethylolpropan (TMP) - werden in einen Reaktor gegeben und mit Hilfe eines Ölbades erwärmt. Nachdem die Stoffe zum größten Teil aufgeschmolzen sind, werden bei einer Temperatur von 160 °C 0,5 Gew.-% Di-n-butylzinnoxid als Katalysator zugesetzt. Die erste Methanolabspaltung tritt bei einer Temperatur von ca. 170 °C auf. Innerhalb 6 bis 8 Stunden wird die Temperatur auf 220 bis 230 °C erhöht und innerhalb weiterer 12 bis 15 Stunden die Reaktion zu Ende geführt. Der Polyester wird auf 200 °C abgekühlt und durch Anlegen von Vakuum (1,33 mbar) innerhalb 30 bis 45 Minuten weitgehend von flüchtigen Anteilen befreit. Während der gesamten Reaktionszeit wird das Sumpfprodukt gerührt und ein schwacher N₂-Strom durch das Reaktionsgemisch geleitet.

Tabelle 2 gibt Polyesterzusammensetzungen und Polyester des Marktes mit den entsprechenden physikalischen und chemischen Kenndaten wieder.

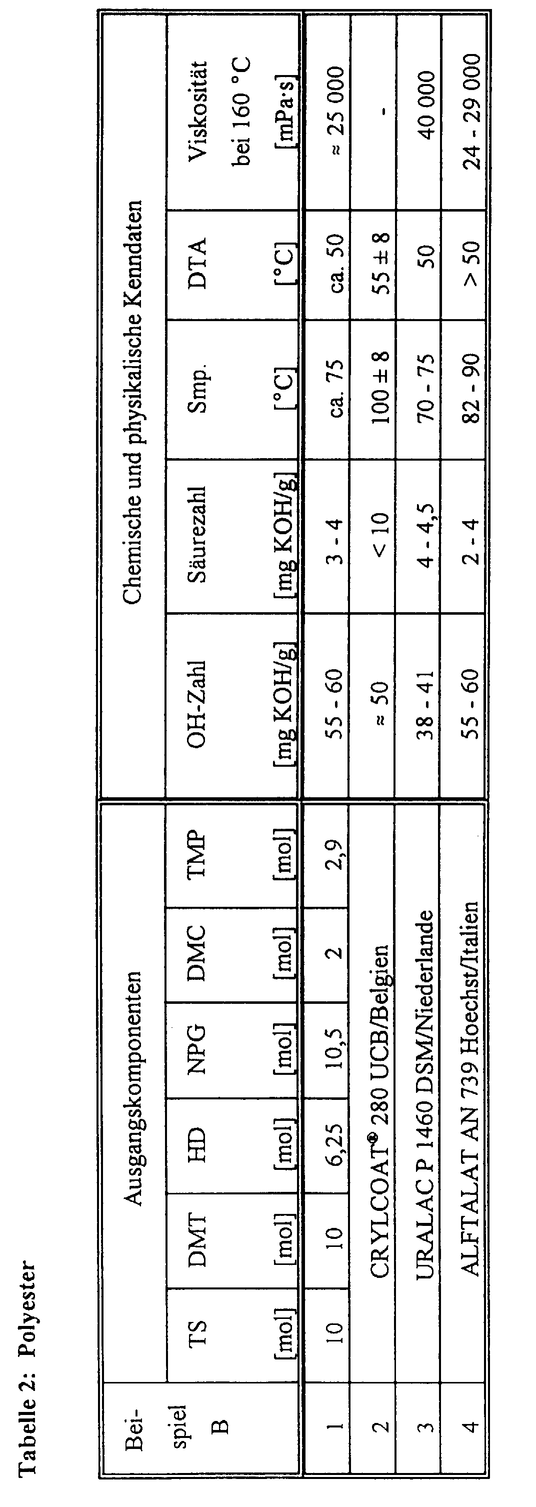

### C Polyurethan-Pulverlacke

### Allgemeine Herstellungsvorschrift

Die zerkleinerten Produkte - blockierte Polyisocyanate (Vernetzer), Polyester, Verlaufsmittel-, ggf. Katalysator-Masterbatch - werden ggf. mit dem Weißpigment in einem Kollergang innig vermischt und anschließend im Extruder bis maximal 130 °C homogenisiert. Nach dem Erkalten wird das Extrudat gebrochen und mit einer Stiftsmühle auf eine Korngröße < 100 µm gemahlen. Das so hergestellte Pulver wird mit einer elektrostatischen Pulverspritzanlage bei 60 KV auf entfettete, ggf. vorbehandelte Eisenbleche appliziert und in einem Umlufttrockenschrank bei Temperaturen zwischen 150 und 180 °C eingebrannt.

### Verlaufsmittel-Masterbatch

Es werden 10 Gew.-% des Verlaufsmittels - ein handelsübliches Copolymer von Butylacrylat und 2-Ethylhexylacrylat - in dem entsprechenden Polyester in der Schmelze homogenisiert und nach dem Erstarren zerkleinert.

### Katalysator-Masterbatch

Es werden 5 Gew.-% des Katalysators - DBTL - in dem entsprechenden Polyester in der Schmelze homogenisiert und nach dem Erstarren zerkleinert.

Die Abkürzungen in den folgenden Tabellen bedeuten:

| | | |
|---|---|---|
| SD = | Schichtdicke in µm | |
| ET = | Tiefung nach Erichsen in mm | (DIN 53 156) |
| GS = | Gitterschnittprüfung | (DIN 53 151) |
| GG 60 °≮ = | Messung des Glanzes nach Gardner | (ASTM-D 5233) |
| Imp. rev. = | Impact reverse in g·m | |
| HK = | Härte nach König in sec | (DIN 53 157) |

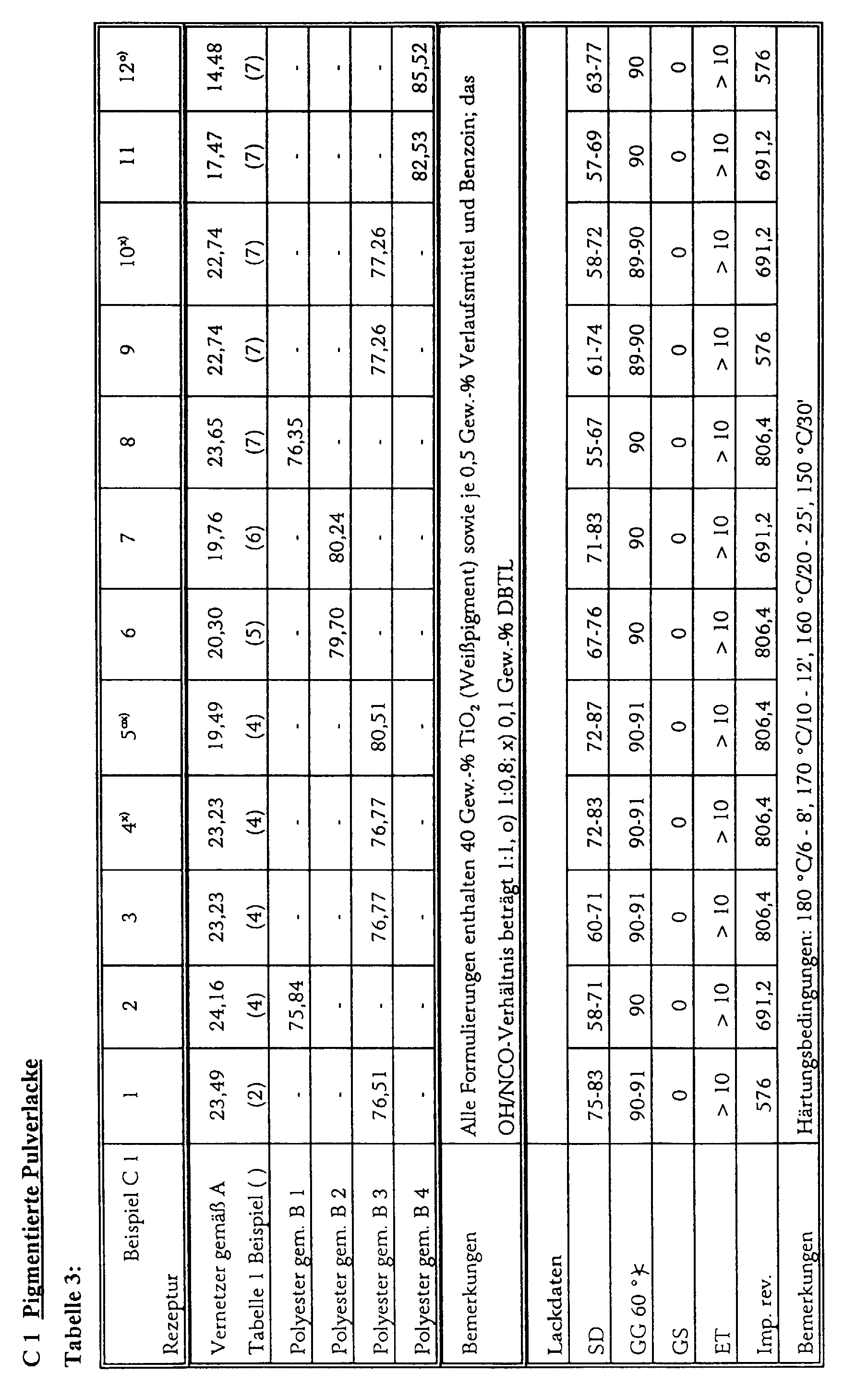

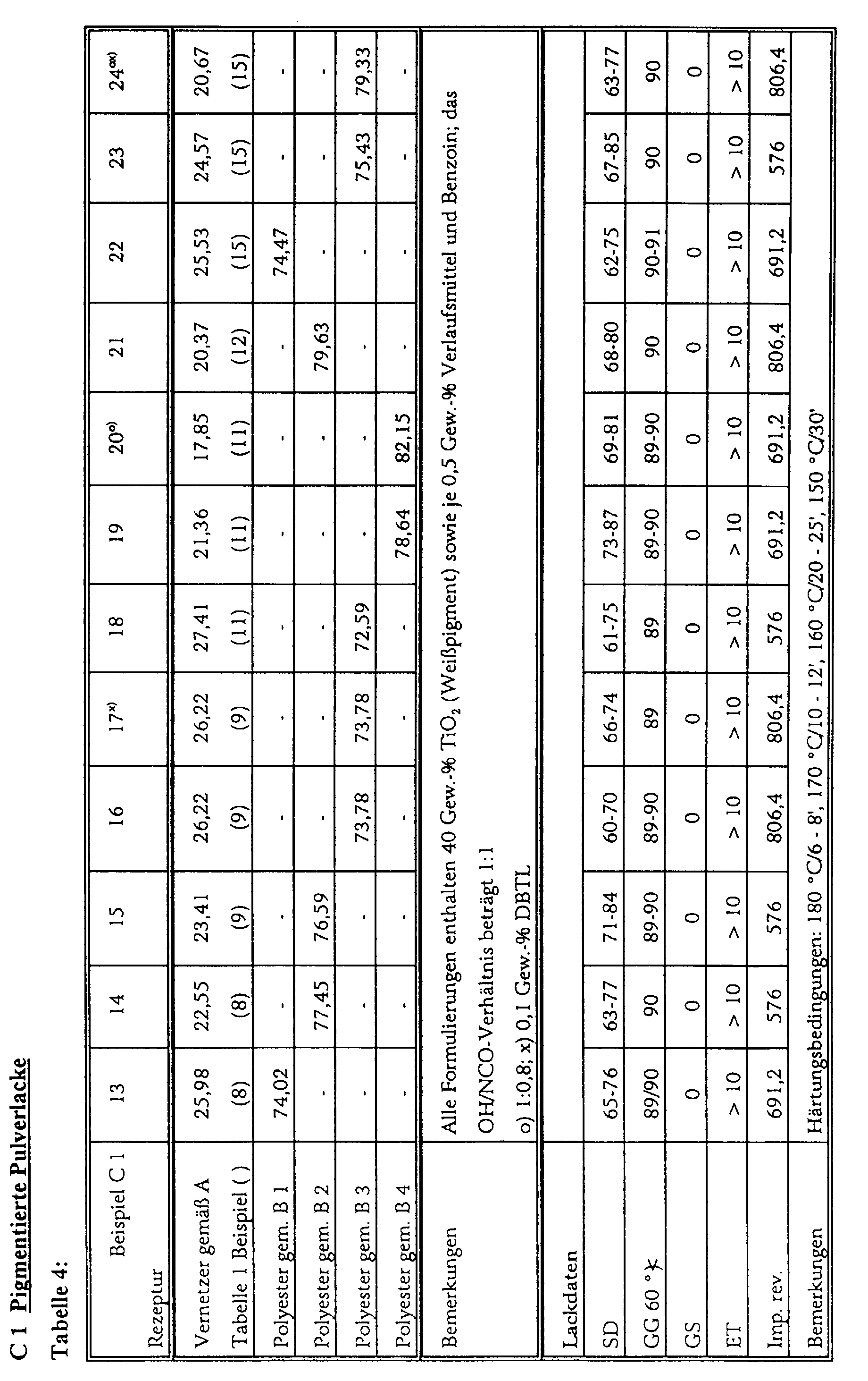

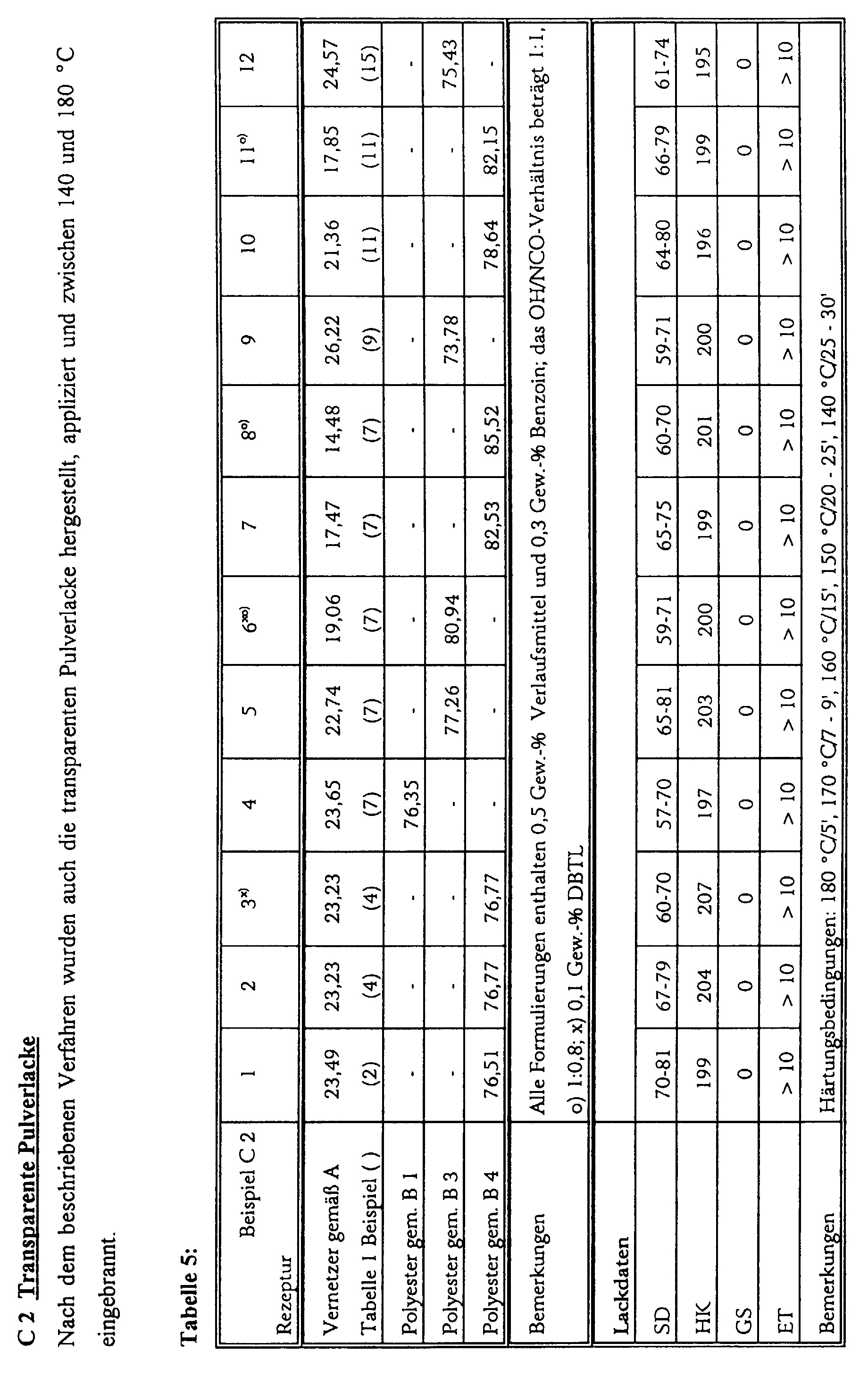

## Patentansprüche

1. PUR-Pulverlacke mit hoher Reaktivität, im wesentlichen enthaltend
a) eine mit 1,2,4-Triazol partiell oder total blockierte Isocyanatkomponente,
b) hydroxylgruppenhaltige Polymere und
c) gegebenenfalls übliche Hilfs- und Zuschlagsstoffe,
wobei die Isocyanatkomponente aus physikalischen Gemischen einzelner Trimerisate (Isocyanato-Isocyanurate) aus aliphatischen und (cyclo)aliphatischen und/oder cycloaliphatischen Diisocyanaten besteht.

2. PUR-Pulverlacke nach Anspruch 1,
dadurch gekennzeichnet,
daß die Isocyanatkomponente aus den Trimerisaten von Hexamethylendiisocyanat, Isophorondiisocyanat und/oder 4.4'-Diisocyanatodicyclohexylmethan besteht.

3. PUR-Pulverlacke nach den Ansprüchen 1 bis 2,
dadurch gekennzeichnet,
daß das Verhältnis der Trimerisate in der eingesetzten Isocyanatkomponente Hexamethylendiisocyanat zu Isophorondiisocyanat und/oder 4.4'-Diisocyanatodicyclohexylmethan von 90 zu 10 Gew.-% bis 10 zu 90 Gew.-% beträgt.

4. PUR-Pulverlacke nach Anspruch 3,
dadurch gekennzeichnet,
daß das Verhältnis von 75 zu 25 Gew.-% bis 25 zu 75 Gew.-% beträgt.

5. PUR-Pulverlacke nach Anspruch 3,
dadurch gekennzeichnet,
daß das Verhältnis von 60 zu 40 Gew.-% bis 40 zu 60 Gew.-% beträgt.

6. PUR-Pulverlacke nach den Ansprüchen 1 bis 5,
dadurch gekennzeichnet,
daß die Isocyanatkomponente einen NCO-Gehalt von 12 - 22 Gew.-%, vorzugsweise von 14 - 20,5 Gew.-%, aufweist.

7. PUR-Pulverlacke nach den Ansprüchen 1 bis 6,
dadurch gekennzeichnet,
daß die Isocyanatkomponente so blockiert vorliegt, daß auf ein Äquivalent Isocyanat 0,5 - 1 mol, vorzugsweise 0,8 - 1 mol, 1,2,4-Triazol kommen.

8. PUR-Pulverlacke nach den Ansprüchen 1 bis 7,
dadurch gekennzeichnet,
daß der latente NCO-Gehalt von 9 - 18 Gew.-%, vorzugsweise 11 - 16 Gew.-%, und der freie NCO-Gehalt ≤ 5 Gew.-%, vorzugsweise ≤ 3 Gew.-%, insbesondere ≤ 2 Gew.-%, beträgt.

9. Verwendung von lagerstabilen, in der Hitze härtbaren transparenten und pigmentierten PUR-Pulverlacken hoher Reaktivität aus partiell oder total mit 1.2.4-Triazol-blockierten Polyisocyanaten, einem hydroxylgruppenhaltigen Polyester sowie gegebenenfalls den in der PUR-Chemie üblichen Hilfs- und Zuschlagsstoffen zum Beschichten beliebiger Substrate, insbesondere von hitzeempfindlichen Werkstücken.

10. Verwendung der PUR-Pulverlacke gemäß den Ansprüchen 1 bis 9 als Auto-Decklack.

## Claims

1. A PU powder coating of high reactivity, essentially comprising
a) an isocyanate component which is partially or totally blocked with 1,2,4-triazole,
b) hydroxyl-containing polymers, and
c) if desired, customary auxiliaries and additives,
the isocyanate component consisting of physical mixtures of individual trimers (isocyanatoisocyanurates) of aliphatic and (cyclo)- aliphatic and/or cycloaliphatic diisocyanates.

2. A PU powder coating according to claim 1, characterized in that the isocyanate component consists of the trimers of hexamethylene diisocyanate, isophorone diisocyanate and/or 4,4'-diisocyanatodicyclohexylmethane.

3. A PU powder coating according to either of claims 1 and 2, characterized in that the ratio of hexamethylene diisocyanate to isophorone diisocyanate and/or 4,4'-diisocyanatodicyclohexylmethane in the trimers in the isocyanate component employed is from 90:10% by weight to 10:90% by weight.

4. A PU powder coating according to claim 3, characterized in that the ratio is from 75:25% by weight to 25:75% by weight.

5. A PU powder coating according to claim 3, characterized in that the ratio is from 60:40% by weight to 40:60% by weight.

6. A PU powder coating according to any of claims 1 to 5, characterized in that the isocyanate component has an NCO content of 12 - 22% by weight, preferably 14 - 20.5% by weight.

7. A PU powder coating according to any of claims 1 to 6, characterized in that the isocyanate component is blocked such that there is 0.5 - 1 mol, preferably 0.8 - 1 mol, of 1,2,4-triazole per equivalent of isocyanate.

8. A PU powder coating according to any of claims 1 to 7, characterized in that the latent NCO content is 9 - 18% by weight, preferably 11 - 16% by weight, and the free NCO content is ≤ 5% by weight, preferably ≤ 3% by weight, in particular ≤ 2% by weight.

9. The use of a storage-stable, heat-curable, transparent or pigmented PU powder coating of high reactivity, composed of partially or totally 1,2,4-triazole-blocked polyisocyanates, a hydroxyl-containing polyester and, if desired, the auxiliaries and additives customary in PU chemistry, for coating any desired substrates, especially heat-sensitive workpieces.

10. The use of a PU powder coating according to any of claims 1 to 9 as an automotive topcoat.

## Revendications

1. Laques en poudre de PUR ayant une réactivité élevée renfermant essentiellement ;
a) un composant isocyanate bloqué, partiellement ou totalement par un 1,2,4-Triazole,
b) des polymères contenant des groupes hydroxyle et,
c) éventuellement des adjuvants et des additifs usuels,
dans lesquelles le composant isocyanate consiste en des mélanges physiques de trimérisats distincts (isocyanatoisocyanurates) à base de diisocyanates aliphatiques et (cyclo)aliphatiques et/ou de diisocyanates cycloaliphatiques.

2. Laques en poudre de PUR selon la revendication 1,
caractérisées en ce que
le composant isocyanate consiste en des trimérisate d'hexaméthyléne diisocyanate, d'isophoronediisocyanate et/ou de 4,4'-diisocyanatodicyclohexylméthane,

3. Laques en poudre de PUR selon les revendications 1 à 2,
caractérisées en ce que
le rapport des trimérisats dans le composant isocyanate mis en oeuvre, hexaméthylènediisocyanate à l'isophorone diisocyanate et/ou au 4,4'-diisocyanatodicyclohexylméthane, s'élève de 90 à 10 % en poids à 10 à 90 % en poids.

4. Laques en poudre de PUR selon la revendication 3,
caractérisées en ce que
le rapport s'élève de 75 à 25 % en poids à 25 à 75 % en poids.

5. Laques en poudre de PUR selon la revendication 3,
caractérisées en ce que
le rapport s'élève de 60 à 40 % en poids 40 à 60 % en poids.

6. Laques en poudre de PUR selon les revendications 1 à 5,
caractérisées en ce que
le composant isocyanate possède une teneur en NCO de 12 à 22 % en poids, de préférence de 14 à 20,5 % en poids.

7. Laques en poudre de PUR selon les revendications 1 à 6,
caractérisées en ce que
le composant isocyanate se présence bloqué de sorte que pour un équivalent d'isocyanate, il vient de 0,5 a 1 mole, de préférence de 0,8 à 1 mole, de 1,2,4-Triazole.

8. Laques en poudre de PUR selon les revendications 1 à 7,
caractérisées en ce que
la teneur latente en NCO s'élève de 9 à 18 % en poids, de préférence de 11 à 16 % en poids et la teneur en NCO libre s'èlève à ≤ 5 % en poids, de préférence à ≤ 3 % en poids, en particulier à ≤ 2 % en poids.

9. Utilisation de laques on poudre de PUR stables à la conservation, durcissables à la chaleur, transparentes et pigmentées, ayant une réactivité élevée, à base de polyisocyanates partiellement ou totalement bloquée par du 1,2,4-Triazole, d'un polyester contenant des groupes hydroxyle ainsi qu'éventuellement des adjuvants et des additifs usuels dans la chimie des PUR, en vue d'enduction de substrats quelconques, particulier de pièces à usiner sensibles à la chaleur.

10. Utilisation de laques en poudre de PUR, selon les revendicaticns 1 à 9,
en tant que vernis de protection pour autos.
